# EUROPÄISCHE PATENTANMELDUNG

(11) **EP 1 048 551 A2**
(43) Veröffentlichungstag der Anmeldung: **02.11.2000**
(21) Anmeldenummer: 00104506.1
(22) Anmeldetag: 10.03.2000
(51) Int. Cl.: B62D 21/02, B62D 21/18

(54) **Kraftfahrzeug mit Mittenbereich und Endbereichen**

(30) Priorität: 29.04.1999 DE 19919560
(71) Anmelder: Volkswagen Aktiengesellschaft, 38436 Wolfsburg (DE)
(72) Erfinder: Sinnhuber, Ruprecht, Dipl.-Ing., 38518 Gifhorn (DE); Schmücker, Martin, 38106 Braunschweig (DE); Ries, Oskar, Dr., 38524 Sassenburg (DE); Wohllebe, Thomas, Dipl.-Ing., 38110 Braunschweig (DE); Zogalla, Gerhard, 38471 Rühen (DE); Pries, Holger, Dr., 38179 Schwülper (DE)

(57) **Zusammenfassung**

Bei einem Kraftfahrzeug mit Mitten- und Endbereichen (1, 2, 3) bildet der Rahmenmittenbereich mit Längs- und Querträgern (14 bis 22) Aufnahmen (23 bis 28) für einen Antriebsmotor (29) und andere starre Einrichtungen (31 bis 34). Dadurch wird die Formstabilität des Rahmenmittenbereichs (1) durch die starren Einrichtungen (29, 31 bis 34) inbesondere in Querrichtung unterstützt, und die Rahmenendbereiche (2, 3) können bei Längscrash energieumsetzend, d.h. verformbar, ausgelegt sein.

## Beschreibung

Die Erfindung betrifft ein Kraftfahrzeug gemäß dem Oberbegriff des Patentanspruchs 1.

Wie bereits die DE-PS 854157 beschreibt, bietet eine konstruktive Trennung von Rahmenmitten- und Endbereichen die vorteilhafte Möglichkeit, ein Kraftfahrzeug mit einer auch bei einem Crash relativ steifen Fahrgastzelle und mit Endbereichen herzustellen, die im Hinblick auf eine Energieumsetzung, d.h. deformierbar, bei einem für die Fahrzeuginsassen gefährlichen Längscrash ausgelegt sind. Besonders vorteilhaft verhält sich eine derartige Kraftfahrzeugkonstruktion gemäß der Beschreibungseinleitung der DE-PS 822781 dann, wenn es sich um ein Kraftfahrzeug in Zellenbauweise handelt, d.h. mit einer Mittelzelle und von dieser lösbaren Endzellen. Hier kann unter Verwendung ein und derselben Mittenzelle bzw. derselben Endzellen nicht nur ein spezielles Kraftfahrzeug, sondern es können unterschiedliche Kraftfahrzeuge zusammengesetzt werden, so daß die Zahl der erforderlichen Einzelzellen bzw. Bereiche des Kraftfahrzeugs minimiert ist.

Für eine derartige Zellen- oder Modularbauweise gibt es auch modernere Vorschläge: So beschreibt die US-PS 4,887,859 ein aus drei Bereichen zusammensetzbares Fahrzeug, wobei der zugleich den vorderen Bereich darstellende Mittenbereich mit dem Innenraum für die Fahrgäste das Antriebsaggregat enthält, während der hintere Bereich als wesentliche Bestandteile eine Hecktür und einen heckseitigen Stoßfänger umfaßt. Zwischen diese beiden Teile kann im Bedarfsfall ein weiterer, mit zwei eigenen Laufrädern bestückter Bereich eingesetzt werden, der beispielsweise weitere Sitze oder einen Ladebereich darstellt. Er wird dann anstelle des beschriebenen, die Hecktür enthaltenden Bereichs an das hintere Ende des vorderen Bereichs angesetzt, während der die Hecktür enthaltende hintere Bereich am hinteren Ende des zusätzlichen Bereichs montiert wird. Über Sicherheitsgesichtspunkte ist dieser Druckschrift nichts zu entnehmen. - Die US-PS 5,401,056 beschreibt ein Modularfahrzeug mit einem polygonförmigen Rahmen. Dieser Rahmen weist drei Bereiche auf, die lösbar miteinander verbindbar sind, und besteht aus Streben. Bei dem diesen Rahmen enthaltenden Fahrzeug handelt es sich um ein solches mit Heckmotor, so daß der das Antriebsaggregat enthaltende Heckbereich nicht im Hinblick auf das gewünschte Deformationsvermögen bei einem Heckcrash ausgelegt werden kann. - Ähnliches gilt für das Modularfahrzeug nach der WO 97/39936, das mit einem Frontmotor und angetriebenen Hinterrädern ausgerüstet ist. Hier kann also der Vorderbereich des Rahmens nicht im Hinblick auf Energieumsetzung durch Verformung bei einem Frontcrash ausgelegt werden. Im einzelnen ist der Rahmen als Stabwerk gestaltet, das in zwei übereinanderliegenden Ebenen verläuft. - Bei dem Modularrahmen nach der US-PS 4,422,685 muß ebenfalls davon ausgegangen werden, daß das Antriebsaggregt an einem der Endbereiche vorgesehen ist, so daß auch hierfür das bereits mehrfach Gesagte gilt. - Ebenfalls diese Nachteile zeigt der drei Bereiche aufweisende Fahrzeugrahmen nach der US-PS 4,881,756.

Zusammenfassend ist zu dem gesamten Stand der Technik also zu sagen, daß zwar die Erkenntnis der Notwendigkeit einer steifen Ausbildung der Fahrgastzelle, dagegen einer Verformbarkeit der Endbereiche des Rahmens seit langem bekannt ist, man aber die in diesem Zusammenhang nachteilige Wirkung der endbereichseitigen Unterbringung des Antriebsaggregats in Kauf genommen hat.

Der Erfindung liegt mithin die Aufgabe zugrunde, ein gattungsgemäßes Kraftfahrzeug zu schaffen, bei dem steife Bestandteile des Antriebsaggregats sowie andere steife Einrichtungen das Crashverhalten des Rahmens nicht nur nicht stören, sondern sogar verbessern.

Die erfindungsgemäße Lösung dieser Aufgabe besteht in den kennzeichnenden Merkmalen des Hauptanspruchs, vorteilhafte Ausbildungen der Erfindung beschreiben die Unteransprüche.

Die Erfindung erschöpft sich also nicht darin, zumindest den Antriebsmotor des Antriebsaggregats nach Art eines Unterflurmotors im Fahrzeugmittenbereich unterzubringen, sondern gibt auch die Lehre, den Rahmenmittenbereich so auszubilden, daß er mit Längs- und Querträgern Aufnahmebereiche zumindest für den motorischen Teil des Antriebsaggregats sowie für weitere steife Einheiten bildet. Diese Einheiten können insbesondere bei einem elektromotorischen Antrieb Batterien sein; andere steife Teile sind beispielsweise ein Kraftstofftank oder eine Klimaanlage. Alle diese steifen Einrichtungen beeinträchtigen infolge ihrer Unterbringung im Rahmenmittenbereich bei einem Längscrash - sei es von vorn, sei es von hinten - die Energieumsetzung durch Deformation des entsprechenden Rahmenendbereichs nicht (er kann besondere Deformationselemente enthalten), sondern sie verbessern sogar das Crashverhalten, da sie eine Versteifung des Rahmenmittenbereichs insbesondere in Querrichtung vornehmen. In Längsrichtung kann es zweckmäßig sein, zwischen schweren Einrichtungen, beispielsweise dem Antriebsmotor, einerseits und einem seine rahmenseitige Aufnahme begrenzenden Querträger andererseits ein Deformationsglied anzuordnen, so daß eine gewisse Entkopplung der Bewegung dieses starren Teils einerseits und des Rahmens andererseits und damit eine Entlastung der Endbereiche sichergestellt ist.

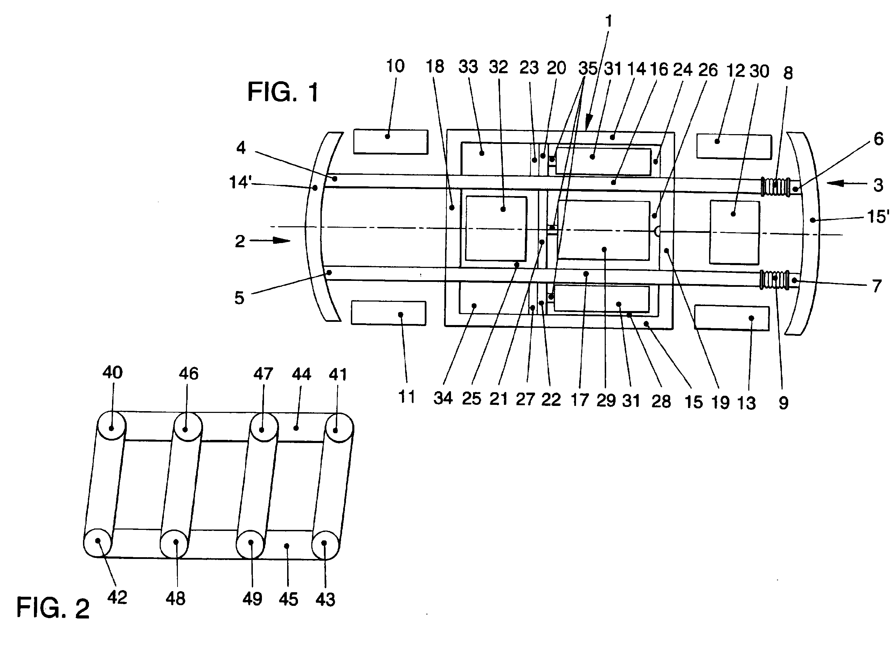

Ausführungsbeispiele der Erfindung werden im folgenden anhand der Zeichnung erläutert, deren Figur 1 in Draufsicht den grundsätzlichen Aufbau eines erfindungsgemäß gestalteten Rahmens für ein Kraftfahrzeug wiedergibt, während die Figuren 2, 3 und 4 Vorderansichten der wesentlichen Bestandteile des Rahmens, insbesondere seines Mittenbereichs, sind.

Betrachtet man zunächst Figur 1, so ist mit 1 allgemein der Rahmenmittenbereich bezeichnet, während die Rahmenendbereiche die Bezugszeichen 2 und 3 haben.

Die Rahmenendbereiche 2 und 3 lassen sich relativ kurz beschreiben, denn sie bestehen im wesentlichen aus den beiden Längsträgern 4 und 5 bzw. 6 und 7, in deren Verlauf, wie nur für die Längsträger 6 und 7 bei 8 und 9 angedeutet, auswechselbare Crashboxen angeordnet sind. Diese sind im Hinblick auf das gewünschte Deformationsverhalten hier des Endbereichs 3 des Rahmens ausgelegt und können nach einem Längscrash leicht ausgewechselt werden.

Wie ersichtlich, verlaufen die Längsträger 4 und 5 sowie 6 und 7 zwischen den Fahrzeugrädern 10 und 11 bzw. 12 und 13, und zwar in fluchtender Anordnung. Sie sind stirnseitig paarweise verbunden durch gleichsame Querträger bildende Stoßfänger 14' und 15'.

Betrachtet man nun den Rahmenmittelteil 1, so enthält er äußere Längsträger 14 und 15, deren Querabstand praktisch der Fahrzeugbreite entspricht, sowie weitere Längsträger 16 und 17 in fluchtender Anordnung mit den Längsträgern 4 bis 7 der Rahmenendbereiche 2 und 3. Weiterhin erkennt man im Rahmenmittenbereich endseitige Querträger 18 und 19, die mit allen Längsträgern verbunden sind, sowie zwischen den Längsträgern 14 bis 17 verlaufende fluchtende Querträger 20, 21 und 22. Die letztgenannten Querträger dienen dazu, zusammen mit den anderen vorhergenannten Trägern des Rahmenmittenteils 1 Aufnahmen 23 bis 28 für verschiedene starre Einrichtungen zu bilden. In diesem Ausführungsbeispiel ist von der Antriebseinheit des Kraftfahrzeugs nur der Motor 29 in einer dieser Aufnahmen, nämlich der Aufnahme 26, untergebracht, während das zugehörige Getriebe 30 im Endbereich 3 angeordnet ist. Zur Erzeugung eines 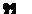 autarken" Mittelbereichs kann aber auch das Getriebe in diesem untergebracht sein, so daß die Endbereich beim Crash auf minimale Blocklänge deformierbar sind. Andere steife Einrichtungen, die im Mittenbereich 1 untergebracht sind, sind beispielsweise Batterien 31, ein Kraftstofftank 32 sowie eine Klimaanlage 33. Auch ein größerer Elektromotor 34, wie er beispielsweise bei einem Hybridantrieb Verwendung findet, kann in dieser Weise in einer der Aufnahmen untergebracht sein.

Besonders zweckmäßig ist es, die Abstände zwischen den verschiedenen Längsträgern, die diese Aufnahmen bilden, so zu wählen, daß sie den entsprechenden Abmessungen der aufgenommenen Einrichtungen möglichst nahekommen. Dann ist bei einem Queraufprall eine wirksame Versteifung des Rahmenmittenbereichs 1 durch Aufblockgehen sichergestellt. Dagegen kann es insbesondere bei schweren Einrichtungen, wie dem Antriebsmotor 29 und den Batterien 31, zweckmäßig sein, in Längsrichtung insbesondere bei einem Frontalcrash wirksam werdende Deformationsglieder 35 bekannten Aufbaues vorzusehen. Dadurch ist sichergestellt, daß zumindest während eines ersten Zeitraums des Frontalcrashs die Masse dieser schweren Einrichtungen in einem gewissen Maße entkoppelt ist von dem Rahmenmittenbereich 1 und damit von dem eigentlichen Fahrzeug.

Betrachtet man nun Figur 2, die schematisch einen Querschnitt durch den Rahmen wiedergibt, so ist dieser hier gleichsam in zwei übereinanderliegenden Ebenen weitgehend identisch ausgebildet: Der Rahmenmittenteil enthält die Längsträger 40 und 41 sowie 42 und 43, die diese beiden Ebenen definieren. Mit 44 und 45 sind dem Querträger 18 bzw. 19 in Figur 1 entsprechende, in unterschiedlichen Ebenen verlaufende Querträger bezeichnet, auf die ebenfalls in den beiden Ebenen verlaufende Längsträger 46, 47 und 48, 49 des betreffenden Rahmenendbereichs verbunden sind. In der Flucht der zuletztgenannten Längsträger können weitere Längsträger des Rahmenmittenbereichs verlaufen, die den Längsträgern 16 und 17 entsprechen.

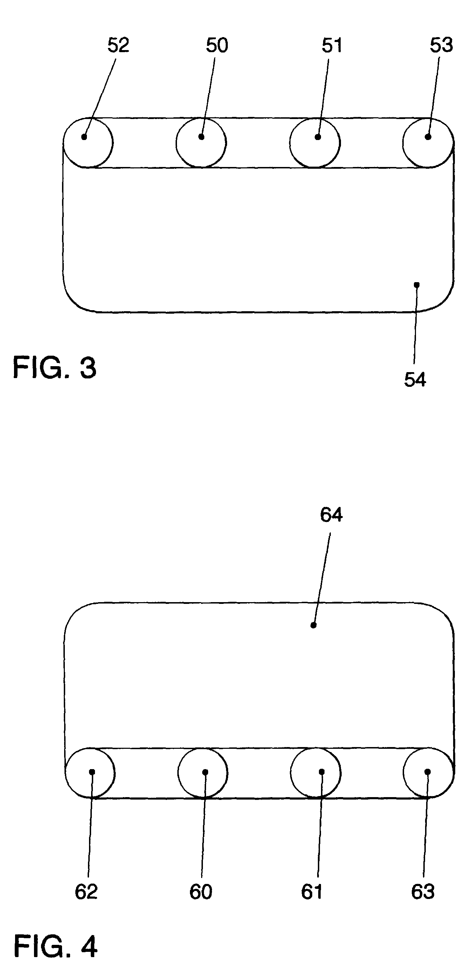

Während in dem Ausführungsbeispiel nach Figur 2 der Rahmen insgesamt als Stabwerk ausgebildet ist, zeigen die Figuren 3 und 4 Lösungen, bei denen der Rahmenmittenteil nur in einer Ebene durch Streben oder Träger gewonnen ist, während die andere Ebene durch eine Wanne, beispielsweise eine Blechwanne, gebildet ist. In Figur 3 sind Längsträger des jeweiligen Endbereichs mit 50 und 51, Längsträger des Mittenbereichs mit 52 und 53 bezeichnet. Die untere Ebene des Rahmenmittenbereichs wird dagegen durch die Wanne 54 gebildet, die aus Blech oder einem geeigneten Kunststoff bestehen kann. Die genannten Längsträger können zur Arretierung von Sitzen eingerichtet sein.

Figur 4 unterscheidet sich von der eben anhand Figur 3 erläuterten Ausführung dadurch, daß die endbereichseitigen Längsträger 60 und 61 sowie die mittenbereichseitigen Längsträger 62 und 63 in der unteren Ebene liegen, während die Wanne 64 gleichsam die obere Ebene des Rahmenmittenbereichs darstellt.

Alle diese Rahmenkonstruktionen arbeiten besonders beim Seitencrash 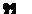 momentenarm".

Ergänzend sei darauf hingewiesen, daß für die verschiedenen bei der Erfindung eingesetzten Träger unterschiedliche Materialien Einsatz finden können. So können die verschiedenen Träger, insbesondere die Längsträger, durch Stahl-Rollprofile oder Magnesium- bzw. Aluminium-Strangprofile realisiert sein; es können aber auch kohlefaser- oder glasfaserverstärkte Kunststoffe Einsatz finden.

Mit der Erfindung ist demgemäß ein gattungsgemäßes Kraftfahrzeug geschaffen, das hinsichtlich seines Crashverhaltens optimiert ist. Sofern die verschiedenen Rahmenbereiche voneinander lösbar gestaltet sind, kann auch ein Fahrzeug in Zellenbauweise mit seinen eingangs beschriebenen Vorteilen hergestellt werden.

## Patentansprüche

1. Eine Antriebseinheit aufweisendes Kraftfahrzeug mit Mittenbereich und Endbereichen und diesen zugeordneten Rahmenbereichen, von denen der Rahmenmittenbereich im Hinlick auf Formstabilität, dagegen die mit Fahrzeugrädern bestückten Rahmenendbereiche im Hinblick auf mit Energieumsetzung verbundene Verformung bei Längscrashs mit für Fahrzeuginsassen gefährlicher Intensität ausgelegt sind, dadurch gekennzeichnet, daß zumindest eine Antriebsmaschine (29) der Antriebseinheit nach Art eines Unterflurmotors im Rahmenmittelteil (1) angeordnet ist, der durch Längs- und Querträger (14, 15, 16, 17; 18, 19, 21) in leiterrahmenartiger Anordnung in steife Bestandteile (29) der Antriebseinheit sowie weitere steife Betriebseinrichtungen (31, 32, 33, 34) aufnehmende Unterbereiche (23, 24, 25, 26, 27, 28) unterteilt ist, deren Abmessungen zumindest in Querrichtung des Fahrzeugs den Abmessungen der aufgenommenen Einrichtungen (29, 31, 32, 33, 34) angepaßt sind.

2. Kraftfahrzeug nach Anspruch 1, dadurch gekennzeichnet, daß ein Getriebe (30) der Antriebseinheit in einem Endbereich (3) angeordnet ist.

3. Kraftfahrzeug nach Anspruch 1 oder 2, dadurch gekennzeichnet, daß zwischen Querträgern (14, 15, 16, 17) einerseits und von Unterbereichen (23, 24, 25, 26, 27, 28) aufgenommenen Einrichtungen (29, 31, 32, 33, 34) andererseits Deformationsglieder (35) angeordnet sind.

4. Kraftfahrzeug nach einem der Ansprüche 1 bis 3, dadurch gekennzeichnet, daß die Breite des Rahmenmittenbereichs (1) etwa der Fahrzeugbreite entspricht, während Längsträger (4, 5, 6, 7) der Rahmenendbereiche (2, 3) zwischen den Fahrzeugrädern (10, 11, 12, 13) verlaufen, und daß in Fortsetzung dieser Längsträger (4, 5, 6, 7) Längsträger (16, 17) von Unterbereichen (23, 24, 25, 26, 27, 28) des Rahmenmittenbereichs (1) verlaufen.

5. Kraftfahrzeug nach einem der Ansprüche 1 bis 4, dadurch gekennzeichnet, daß der Rahmen durch in zwei Ebenen verlaufende Träger (40, 41, 42, 43, 44, 45, 46, 47, 48, 49) gebildet ist.

6. Kraftfahrzeug nach Anspruch 5, dadurch gekennzeichnet, daß die Träger in einer Ebene des Rahmenmittenbereichs durch eine Wanne (54) gebildet sind.

7. Kraftfahrzeug nach einem der Ansprüche 1 bis 6, dadurch gekennzeichnet, daß im Zuge von Längsträgern (6, 7) der Rahmenendbereiche (3) Crashboxen (8, 9) vorgesehen sind.

8. Kraftfahrzeug nach einem der Ansprüche 1 bis 7, dadurch gekennzeichnet, daß das Kraftfahrzeug als Zellenfahrzeug mit vom Rahmenmittenbereich (1) lösbaren Rahmenendbereichen (2, 3) ausgebildet ist.

9. Kraftfahrzeug nach einem der Ansprüche 1 bis 8, dadurch gekennzeichnet, daß alle Antriebs- und Betriebseinrichtungen im Rahmenmittenbereich (1) untergebracht sind.
